(19) Europäisches Patentamt
European Patent Office
Office européen des brevets

(11) Veröffentlichungsnummer: **0 356 841**
**A2**

(12) # EUROPÄISCHE PATENTANMELDUNG

(21) Anmeldenummer: **89115306.6**

(22) Anmeldetag: **19.08.89**

(51) Int. Cl.5: **C08F 10/06 , C08F 4/646**

(30) Priorität: **30.08.88 DE 3829285**

(43) Veröffentlichungstag der Anmeldung:
**07.03.90 Patentblatt 90/10**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Koelle, Peter, Dr.**
**An der Froschlache 19**
**D-6700 Ludwigshafen(DE)**
Erfinder: **Kerth, Juergen, Dr.**
**Wattenheimer Strasse 15**
**D-6719 Carlsberg(DE)**
Erfinder: **Zolk, Ralf, Dr.**
**Weinbietstrasse 7**
**D-6714 Weisenheim(DE)**
Erfinder: **Hemmerich, Rainer, Dr.**
**Veilchenweg 9**
**D-6718 Gruenstadt(DE)**

(54) **Verfahren zum Herstellen von Homo- und Copolymerisaten des Propens mittels eines Ziegler-Natta-Katalysatorsystems.**

(57) Rahmen ist das Herstellen von Polymerisaten des Propens mittels eines Ziegler-Natta-Katalysatorsystems aus (1) einer Titankomponente, die auf einem feinteiligen, formgebenden Kieselgel basiert und Titan, Magnesium, Chlor sowie ein Halogenbenzolcarbonsäurederivat enthält, (2) einer Aluminiumkomponente sowie (3) einer Silankomponente. Charakteristikum ist der Einsatz einer Titankomponente (1), welche erhalten wird, indem man (1.1) zunächst (I) einen Trägerstoff herstellt aus (Ia) einem Kieselgel, das einen relativ hohen Feuchtigkeitsgehalt aufweist, (Ib) einer magnesiumorganischen Verbindung und (Ic) einem gasförmigen Chlorierungsmittel, derart, daß man (1.1.1) zuerst (Ia) mit (Ib) umsetzt, (1.1.2) dann in das aus (1.1.1) Erhaltene (Ic) einleitet und (I), (1.2) daraufhin ein festphasiges Zwischenprodukt herstellt aus (I), (II) einem Alkanol, (III) Titantetrachlorid sowie (IV) einem Halogenphthalsäureabkömmling, derart, daß man (1.2.1) zuerst (I) mit (II) umsetzt, (1.2.2) anschließend in das aus (1.2.1) Resultierende (III) einbringt, mit der Maßgabe, daß bei (1.2.1) bzw. (1.2.2) auch (IV) eingebracht wird, (1.3) dann das aus (1.2) festphasig Resultierende mit Titantetrachlorid oder einer Titantetrachlorid/Kohlenwasserstoff-Mischung extrahiert und (1.4) schließlich das aus (1.3) festphasig Resultierende mit einem flüssigen Kohlenwasserstoff wäscht.

EP 0 356 841 A2

Xerox Copy Centre

## Verfahren zum Herstellen von Homo- und Copolymerisaten des Propens mittels eines Ziegler-Natta-Katalysatorsystems

Die vorliegende Erfindung betrifft ein Verfahren zum Herstellen von Homopolymerisaten des Propens sowie Copolymerisaten des Propens mit untergeordneten Mengen anderer $C_2$- bis $C_{12}$-, insbesondere $C_2$- bis $C_6$-$\alpha$-Monoolefine durch Polymerisation, insbesondere durch Trockenphasenpolymerisation, des bzw. der Monomeren bei Temperaturen von 20 bis 160, insbesondere 50 bis 120 °C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Halogenbenzolcarbonsäurederivat enthält,

(2) einer Aluminiumkomponente der Formel

$Al\ R_3$,

worin steht

R für einen nicht mehr als 8, insbesondere nicht mehr als 4 Kohlenstoffatome aufweisenden Alkylrest, sowie

(3) einer Silankomponente der Formel

$R^1_n\ Si(OR^2)_{4-n}$,

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur,

$R^2$ für einen nicht mehr als 15, vorzugsweise nicht mehr als 8, und insbesondere nicht mehr als 4 Kohlenstoffatome aufweisenden Alkylrest, und

n für eine Zahl von 0 bis 3, vorzugsweise von 0 bis 2, und insbesondere die Zahl 1 oder 2, mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 300, und das Molverhältnis Aluminiumkomponente (2) : Silankomponente (3) 1 : 0,01 bis 1 : 0,8, insbesondere 1 : 0,02 bis 1 : 0,5 beträgt.

Polymerisationsverfahren dieser Art sind bekannt; ihre Besonderheit gegenüber vergleichbaren anderen Verfahren liegt in der speziellen Ausgestaltung des Katalysatorsystems, wobei als Prototypen für den vorliegenden Fall die aus den EP-OSen 0 014 523, 0 045 977, 0 045 976, 0 171 200 und 0 195 497 sowie den GB-PSen 2 101 609 und 2 101 611 bekannten Verfahren genannt werden können.

Die speziellen Ausgestaltungen der Katalysatorsysteme werden vorgenommen, um bestimmte Ziele zu erreichen, wie die folgenden:

Das Katalysatorsystem soll leicht herstellbar sein und eine hohe Ausbeute an Polymerisat liefern, welches einen möglichst großen isotaktischen Anteil zu enthalten hat. Das Katalysatorsystem soll darüber hinaus Polymerisate mit speziellen morphologischen Eigenschaften erzeugen, etwa im Sinne einer einheitlichen Korngröße und/oder einer Verringerung der Feinstkornanteile und/oder eines hohen Schüttgewichts. Neben diesen für die Beherrschung der Polymerisationssysteme, die Aufarbeitung der Polymerisate und/oder ihre Verarbeitung wichtigen Parametern ist auch ein niedriger Halogengehalt des Polymerisats - besonders im Hinblick auf Korrosionsprobleme - von Bedeutung, was durch Steigerung der Polymerausbeute und/oder ein Katalysatorsystem zu erreichen ist, welches möglichst wenig Halogen enthält.

Manche dieser Ziele sind nach dem Stand der Technik nur mit sehr aufwendigen Verfahren zu erreichen, oder dann, wenn man andere Ziele zurücksetzt:

So wird z.B. in der EP-OS 0 045 977 ein Katalysatorsystem, bestehend aus "aktivem" $MgCl_2$, $TiCl_4$ und einem Phthalsäurederivat, beschrieben. Mit Kieselgel als formgebendem Trägermaterial ist die Produktivität des Katalysatorsystems jedoch nicht mehr befriedigend; auch ist der Chlorgehalt der Polymerisate vergleichsweise hoch.

In den EP-OSen 0 014 523 und 0 171 200 sowie den GB-PSen 2 101 609 und 2 101 611 werden Katalysatorsysteme beschrieben, deren Titankomponente durch Behandeln eines festen, anorganischen Oxids mit einer organischen Magnesiumverbindung, einer Lewis-Base und Titantetrachlorid erhalten wird, wobei zusätzlich ein Halogenierungsmittel, das kein Titantetrachlorid ist und/oder eine organische Verbindung der Metalle Bor, Aluminium, Silicium oder Zinn oder ein Bortrihalogenid oder ein Halogenatome enthaltender Alkohol eingesetzt werden muß. Trotz aufwendiger und langwieriger Herstellungsweise ist die Produktivität des entsprechenden Katalysatorsystems nicht befriedigend.

In der EP-OS 0 195 497 wird ein Katalysatorsystem beschrieben, dessen Titankomponente durch Behandeln von $SiO_2$ mit einer organischen Mg-Verbindung, einem Alkohol, einer Lewis-Base und $TiCl_4$ erhalten wird. Auch bei diesem Katalysatorsystem ist die Produktivität gering.

In der EP-OS 0 045 976 wird ein Katalysatorsystem konkret mit Phthalsäurediethylester als interne

Base beschrieben jedoch ist die Produktivität im Vergleich zu höheren Phthalsäureestern gering.

In der EP-Patentanmeldung 88 114 424.0 ist bereits ein Verfahren vorgeschlagen, bei dem anstelle des Halogenphthalsäureabkömmlings (IV) verwendet wird ein Phthalsäurederivat der allgemeinen Formel:

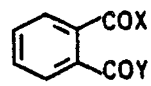 ,

worin stehen X und Y gemeinsam für Sauerstoff oder X sowie Y für Chlor oder einen $C_1$- bis $C_{10}$-Alkoxyrest. Nachteilig bei diesem bekannten Verfahren ist der Umstand, daß die Morphologie des Produktes sich auf einem niederem Niveau befindet.

Die bekannten Verfahren lassen somit Wünsche offen, insbesondere was eine gute Produktivität und einen geringen Chlorgehalt in den Polymerisaten - bei zugleich hoher Isotaktizität und guter Morphologie - betrifft.

Hier setzt die Aufgabenstellung der vorliegenden Erfindung an, nämlich eine Titankomponente zu schaffen, die gegenüber den Verfahren des Standes der Technik bei besonders guter Produktivität zugleich Polymerisate mit geringem Chlorgehalt, hoher Isotaktizität und guter Morphologie zu liefern vermag.

Es wurde gefunden, daß die gestellte Aufgabe gelöst werden kann mit einem Katalysatorsystem, das eine aus (I) einem speziellen Trägerstoff, der in definierter Weise aus (Ia) einem bestimmten feinteiligen Kieselgel, das einen relativ hohen Feuchtigkeistsgehalt aufweist, (Ib) einer bestimmten magnesiumorganischen Verbindung und (Ic) einem bestimmten gasförmigen Chlorierungsmittel erhalten worden ist, sowie (II) einem bestimmten Alkanol, (III) Titantetrachlorid sowie (IV) einem speziell ausgewählten Phthalsäureabkömmling in besonderer Weise hergestellte Titankomponente (1) enthält.

Gegenstand der vorliegenden Erfindung ist dementsprechend ein Verfahren zum Herstellen von Homopolymerisaten des Propens sowie Copolymerisaten des Propens mit untergeordneten Mengen anderer $C_2$- bis $C_{12}$-, insbesondere $C_2$-bis $C_6$-α-Monoolefine durch Polymerisation, insbesondere durch Trockenphasenpolymerisation, des bzw. der Monomeren bei Temperaturen von 20 bis 160, insbesondere 50 bis 120 °C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Halogenbenzolcarbonsäurederivat enthält,

(2) einer Aluminiumkomponente der Formel

$Al\ R_3$,

worin steht

R für einen nicht mehr als 8, insbesondere nicht mehr als 4 Kohlenstoffatome aufweisenden Alkylrest, sowie

(3) einer Silankomponente der Formel

$R^1_n\ Si(OR^2)_{4-n}$,

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur

$R^2$ für einen nicht mehr als 15, vorzugsweise nicht mehr als 8, und insbesondere nicht mehr als 4 Kohlenstoffatome aufweisenden Alyklrest, und

n für eine Zahl von 0 bis 3, vorzugsweise von 0 bis 2, und insbesondere die Zahl 1 oder 2, mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 300 und das Molverhältnis Aluminiumkomponente (2) : Silankomponente (3) 1 : 0,01 bis 1 : 0,8, insbesondere 1 : 0,02 bis 1 : 0,5 beträgt.

Das erfindungsgemäße Verfahren ist dadurch gekennzeichnet, daß man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das das einen Teilchendurchmesser von 1 bis 1000, vorzugsweise 5 bis 500 und insbesondere 10 bis 200 µm, ein Porenvolumen von 0,3 bis 5,0, insbesondere 1,0 bis 3,0 $cm^3/g$, eine Oberfläche von 100 bis 1000, insbesondere 200 bis 500 $m^2/g$ besitzt, die Formel $SiO_2 \cdot a\ Al_2O_3$ - worin a steht für eine Zahl im Bereich von 0 bis 2, insbesondere 0 bis 0,5 -hat und einen solchen Feuchtigkeitsgehalt aufweist, daß es bei einer Temperatur von 1000 °C im Verlauf von 0,5 Stunden 1 bis 20, vorzugsweise 2 bis 15 und insbesondere 4 bis 10 Gew.% - bezogen auf das anfängliche Gesamtgewicht des Kieselgels - Wasser verliert, (Ib) einer magnesiumorganischen Verbindung der Formel $MgR^3R^4$ - worin $R^3$ und $R^4$ stehen für einen $C_2$- bis $C_{10}$-,

vorzugsweise $C_4$- bis $C_8$-Alkylrest - und (Ic) einem gasförmigen Chlorierungsmittel der Formel ClZ -worin Z steht für Cl oder H, vorzugsweise H -, derart, daß man zuerst

(1.1.1) in einer ersten Unterstufe in einem flüssigen inerten Kohlenwasserstoff, insbesondere einem Alkan, unter ständiger Durchmischung bei einer Temperatur von 10 bis 120, insbesondere 20 bis 100° C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10, insbesondere 1,5 bis 5 Molteile der magnesiumorganischen Verbindung (Ib), und das Zusammengebrachte während 0,1 bis 5, insbesondere 0,5 bis 2 Stunden bei einer Temperatur im Bereich von 20 bis 140, insbesondere 60 bis 90° C, hält, dann

(1.1.2) in einer zweiten Unterstufe unter ständiger Durchmischung bei einer Temperatur im Bereich von -20 bis +80, insbesondere 0 bis +60° C, in das aus der ersten Unterstufe Erhaltene das gasförmige Chlorierungsmittel (Ic) einleitet, wobei mengenmäßig eingesetzt werden auf 1 Molteil der magnesiumorganischen Verbindung (IIb) 2 bis 40, insbesondere 5 bis 20 Molteile des Chlorierungsmittels (Ic), das Ganze 0,5 bis 5, insbesondere 0,5 bis 1 Stunden bei einer Temperatur in dem genannten Bereich beläßt und

(1.2) in einer zweiten Stufe ein festphasiges Zwischenprodukt herstellt aus (I) dem in der ersten Stufe erhaltenen Trägerstoff, (II) einem $C_2$- bis $C_4$-Alkanol, insbesondere Ethanol, (III) Titantetrachlorid sowie (IV) einem Halogenphthalsäureabkömmling der Formel

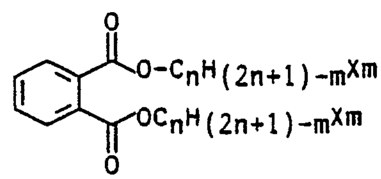

worin stehen X für Chlor, n ≤2 insbesondere 2 bis 4 und m für eine Zahl zwischen 1 und 3, derart, daß man zuerst

(1.2.1) in einer ersten Unterstufe in einem flüssigen inerten Kohlenwasserstoff, insbesondere einem Alkan, unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5, insbesondere 2,5 bis 3,5 Molteile des Alkanols (II), und das Zusammengebrachte während 0,5 bis 5, insbesondere 1 bis 2 Stunden bei einer Temperatur im Bereich von 20 bis 140, insbesondere 70 bis 90° C hält, anschließend

(1.2.2.) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20, insbesondere 4 bis 8 Molteile des Titantetrachlorids (III), das Zusammengebrachte während 0,5 bis 5, insbesondere 1 bis 2 Stunden auf einer Temperatur im Bereich von 10 bis 150, insbesondere 90 bis 120° C hält und das dabei resultierende festphasige Zwischenprodukt unter Abtrennung der flüssigen Phase isoliert, mit der Maßgabe, daß zumindest im Zuge einer der Unterstufen (1.2.1) oder (1.2.2) der Halogenphthalsäureabkömmling (IV) eingebracht wird, wobei mengenmäßig eingesetzt werden auf 1 Molteil Magnesium des Trägerstoffs (I) 0,01 bis 1, vorzugsweise 0,1 bis 0,4, insbesondere 0,25 bis 0,35 Molteile des Halogenphthalsäureabkömmlings (IV), dann

(1.3) in einer dritten Stufe das aus der zweiten Stufe erhaltene festphasige Zwischenprodukt bei einer Temperatur im Bereich von 100 bis 150, insbesondere 115 bis 135° C, während einer Zeitspanne von 0,2 bis 5, insbesondere 1,5 bis 3 Stunden einer ein-oder mehrstufigen oder kontinuierlichen Extraktion mit Titantetrachlorid oder einer Mischung aus Titantetrachlorid und einem bis zu 12, vorzugsweise bis zu 10 Kohlenstoffatome aufweisenden Alkylbenzol, insbesondere Ethylbenzol, deren Gewichtsanteil an Titantetrachlorid mindestens 5, insbesondere mindestens 10 Gew.-%, beträgt, unterzieht, wobei mengenmäßig eingesetzt werden auf 10 Gewichtsteile des aus der zweiten Stufe erhaltenen festphasigen Zwischenprodukts insgesamt 10 bis 1000, vorzugsweise 20 bis 800, insbesondere 40 bis 300 Gewichtsteile des Extraktionsmittels, und schließlich

(1.4) in einer vierten Stufe das in der dritten Stufe entstandene festphasige Produkt solange mit einem flüssigen inerten Kohlenwasserstoff, insbesondere einem Alkan, wäscht, bis der Kohlenwasserstoff weniger als 2, vorzugsweise weniger 1 Gew.% Titantetrachlorid enthält - und derart die Titankomponente (1) gewinnt.

Wie sich gezeigt hat, läßt sich das erfindungsgemäße Verfahren mit besonders gutem Erfolg durchführen, wenn ein Katalysatorsystem eingesetzt wird, dessen Silankomponente (3) eine solche ist, in deren

Formel
$R^1_n Si(OR^2)_{4-n}$
stehen
$R^1$ für einen aliphatischen Kohlenwasserstoffrest oder $C_1$- bis $C_4$-Alkyl-phenylrest, Methyl-phenylrest oder vor allem einem verzweigten aliphatischen Kohlenwasserstoffrest, insbesondere Diisobutyl, Isobutylisopropyl und Diisopropyl
$R^2$ für einen nicht mehr als 4 Kohlenstoffatome aufweisenden Alkylrest, vor allem einen Methyl- oder Ethylrest, und
n für die Zahl 1 oder 2.

Zu dem erfindungsgemäßen Verfahren ist im einzelnen das folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder - insbesondere - kontinuierliches Verfahren, sei es z.B. als Suspensionspolymerisationsverfahren oder - insbesondere - Trockenphasenpolymerisationsverfahren. Die erwähnten technologischen Ausgestaltungen - mit anderen Worten: die technologischen Varianten der Polymerisation von $\alpha$-Monoolefinen nach Ziegler-Natta - sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Was die stoffliche Seite des neuen Katalysatorsystems betrifft, ist im einzelnen das folgende zu sagen:

(1) Das zur Herstellung der Titankomponente einzusetzende kleinteilige Kieselgel (Ia) wird im allgemeinen ein Alumosilikat oder - insbesondere - ein Siliciumdioxid sein; wichtig ist, daß es die geforderten Eigenschaften besitzt. Wie sich gezeigt hat, sind die der gegebenen Spezifikation entsprechenden im Handel erhältlichen, für Trägerstoffe einschlägig üblichen Kieselgele gut geeignet. Von besonderer Bedeutung ist, daß das Kieselgel einen solchen Feuchtigkeitsgehalt aufweist, daß es bei einer Temperatur von 1000 °C Verlauf von 0,5 Stunden 1 bis 20, vorzugsweise 2 bis 15 und insbesondere 4 bis 10 Gew.% - bezogen auf das anfängliche Gesamtgewicht des Kieselgels - Wasser verliert (Meßmethode: Differential-Thermogravimetrie.)

Die gleichfalls einzusetzende magnesiumorganische Verbindung (Ib) kann z.B. Dibutylmagnesium, Dihexylmagnesium und insbesondere Butyloctylmagnesium sein.

Das ferner einzusetzende gasförmige Chlorierungsmittel (Ic) sollte möglichst trocken und rein sein; es besteht aus Chlor oder insbesondere Chlorwasserstoff.

Der als Hilfsstoff dienende flüssige inerte Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird. Als Beispiele für geeignete Kohlenwasserstoffe seien genannt: Pentane, Hexane, Heptane, Benzine und Cyclohexan.

Die zur Herstellung der Titankomponente (1) einzusetzenden Alkanole (II) können handelsübliche sein; sie sollten vorteilhafterweise relativ hohe Reinheitsgrade aufweisen. Gut geeignet sind z.B. Ethanol, n-Propyl-, i-Propyl-, n-Butyl-, i-Butyl- oder tert.-Butylalkohol; besonders geeignet ist Ethanol.

Das zur Herstellung der Titankomponente (1) ebenfalls einzusetzende Titantetrachlorid (III) sollte ein bei Ziegler-Natta-Katalysatorsystemen übliches sein; der gegebenenfalls im Gemisch mit dem Titantetrachlorid einzusetzende Kohlenwasserstoff sollte möglichst rein und trocken sein.

Auch der einzusetzende, oben näher definierte Halogenphthalsäureabkömmling (IV) sollte vorteilhafterweise einen hohen Reinheitsgrad aufweisen. Wie sich gezeigt hat, ist für den erfindungsgemäßen Zweck ganz besonders gut geeignet das Bis(trichlorethyl)phthalat, aber auch andere Halogenphthalsäureester, wie Bis(chlorpropyl)phthalat und Bis(chlorethyl)phthalat sind geeignet.

Der zur Herstellung der Titankomponente (1) in Stufe (1.4) einzusetzende Kohlenwasserstoff kann ebenfalls ein üblicher sein; er sollte vorteilhafterweise einen relativ hohen Reinheitsgrad aufweisen.

Die Herstellung der Titankomponente (1) ist einfach und für den Fachmann ohne Erläuterungen möglich. Zu den Stufen (1.2) und (1.3) ist lediglich zu erwähnen, daß die Isolierung des jeweils resultierenden Feststoffs zweckmäßigerweise durch Absaugen erfolgt.

(2) Als Aluminiumkomponenten (2) mit der angegebenen Formel kommen die einschlägig üblichen, dieser Formel gehorchenden in Betracht: sie sind aus Literatur und Praxis so wohlbekannt, daß auf sie nicht näher eingegangen zu werden braucht. Als herausragender Vertreter sei beispielsweise genannt Triethylaluminium.

(3) Die das Katalysatorsystem vervollständigende Silankomponente (3) ist insbesondere ein Trialkoxyalkylphenylsilan, ein Dialkoxydialkylphenylsilan oder ein Dialkoxydialkylsilan der angegebenen Formel. Als

herausragende Vertreter sind zu nennen das Diisobutyldimethoxysilan, Diisopropyldimethoxysilan und Isobutylisopropyldimethoxysilan, ferner sind Triethoxytolylsilan und Dimethoxyditolylsilan zu nennen.

Das erfindungsgemäße Verfahren erlaubt es, Homo- und Copolymerisate, z.B. des binären oder ternären Typs, - auch Blockcopolymerisate - des Propens mit untergeordneten Mengen anderer $C_2$- bis $C_{12}$-$\alpha$-Monoolefine in vorteilhafter Weise herzustellen, wobei besonders geeignete zu polymerisierende $\alpha$-Monoolefine als Comonomere Ethen, Buten-1, 4-Methylpenten-1 und Hexen-1 sind; es eignen sich aber auch z.B. n-Okten-1, n-Decen-1 sowie n-Dodecen-1.

Beispiel 1

Herstellen der Titankomponente (1)

Es wird so verfahren, daß man zunächst

(1.1) in einer ersten Stufe (I) einen Trägerstoff herstellt aus (Ia) einem feinteiligen Kieselgel, das einen Teilchendurchmesser von 20 bis 45 µm, ein Porenvolumen von 1,75 $cm^3/g$, eine Oberfläche von 320 $m^2/g$ besitzt, die Formel $SiO_2$ hat und einen solchen Feuchtigkeitsgehalt aufweist, daß es bei einer Temperatur von 1000 °C im Verlauf von 0,5 Stunden 7,4 Gew.% - bezogen auf das anfängliche Gesamtgewicht des Kieselgels - Wasser verliert (Meßmethode: Differential-Thermogravimetrie), (Ib) Butyl-octylmagnesium und (Ic) Chlorwasserstoff, derart, daß man zuerst

(1.1.1) in einer ersten Unterstufe in n-Heptan, unter ständiger Durchmischung mittels Rühren bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 5,0 Molteile der magnesiumorganischen Verbindung (Ib), und das Zuammengebrachte während 0,5 Stunden bei einer Temperatur im Bereich von 90 °C hält, dann

(1.1.2) in einer zweiten Unterstufe unter ständiger Durchmischung mittels Rühren bei einer Temperatur im Bereich von 20 °C in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 10 Molteile des Chlorierungsmittels (Ic), das Ganze 0,5 Stunden bei einer Temperatur in dem genannten Bereich beläßt und, daraufhin

(1.2) in einer zweiten Stufe ein festphasiges Zwischenprodukt herstellt aus (I) dem in der ersten Stufe erhaltenen Trägerstoff, (II) Ethanol (III) Titantetrachlorid sowie (IV) Bis(trichlorethyl)phthalt in einer kalt gesättigten Lösung in Ethylbenzol, derart, daß man zuerst

(1.2.1) in einer ersten Unterstufe in n-Heptan unter ständiger Durchmischung mittels Rühren bei Raumtemperatur den Trägerstoff (I) und das Ethanol (II) zusammenbringt - wobei mengenmäßig eingesetzt werden auf 1 Molteil Magnesium des Trägerstoffs (I) 3 Molteile des Ethanols (II) - und das Zusammengebrachte während 0,5 Stunden bei einer Temperatur im Bereich von 80 °C hält, anschließend

(1.2.2) in einer zweiten Unterstufe unter ständiger Durchmischung mittels Rühren bei Raumtemperatur in das aus der ersten Unterstufe resultierende Reaktionsgemisch das Titantetrachlorid (III) einbringt - wobei mengenmäßig eingesetzt werden auf 1 Molteil Magnesium des Trägerstoffs (I) 6 Molteile des Titantetrachlorids (III) - anschließend das Bis(trichlorethyl)phthalat einbringt - wobei mengenmäßig eingesetzt werden auf 1 Molteil Magnesium des Trägerstoffs (I) 0,30 Molteile des Halogenphthalsäureesters - das aus der ersten Unterstufe Erhaltene - das Zusammengebrachte unter Rühren während 2 Stunden auf einer Temperatur im Bereich von 120 °C hält, und das dabei resultierende festphasige Zwischenprodukt unter Abtrennung der flüssigen Phase mittels Absaugen isoliert, dann

(1.3) in einer dritten Stufe das aus der zweiten Stufe erhaltene festphasige Zwischenprodukt bei einer Temperatur von 125 °C während einer Zeitspanne von 3 Stunden einer kontinuierlichen Extraktion mit einer Mischung aus Titantetrachlorid und Ethylbenzol, deren Anteil an Titantetrachlorid 10 Gew.% beträgt, unterzieht - wobei mengenmäßig eingesetzt werden auf 10 Gew.-Teile des aus der zweiten Stufe erhaltenen festphasigen Zwischenprodukts 140 Gew.-Teile des Titantetrachlorid/Ethylbenzol-Gemischs - hierauf das entstandene festphasige Zwischenprodukt mittels Filtration isoliert und schließlich

(1.4) in einer vierten Stufe das in der dritten Stufe gewonnene festphasige Produkt solange mit n-Heptan wäscht, bis das n-Heptan weniger als 0,3 Gew.% Titantetrachlorid enthält - und derart die Titankomponente (1) gewinnt; sie enthält 2,6 Gew.-% Titan, 9,7 Gew.-% Magnesium und 32,2 Gew.-% Chlor.

Polymerisation

Ein Stahlautoklav von 10-l-Volumen, ausgerüstet mit einem Rührer, wird mit 50 g Polypropenpulver, 10 mMol Aluminiumtriethyl (in Form einer 1-molaren Lösung in n-Heptan) als Aluminiumkomponente (2), 1 mMol Isobutylisopropyldimethoxysilan (in Form einer 1-molaren Lösung in n-Heptan) als Silankomponente (3), 10 Normalliter Wasserstoff und schließlich 100 mg (≙ 0,05 mMol Titan), der oben beschriebenen Titankomponente (1) bei 30 °C beschickt. Die Reaktortemperatur wird binnen 10 Minuten auf 70 °C, der Reaktordruck mittels Aufpressen von gasförmigem Propen in dieser Zeit auf 28 bar gebracht.

Die eigentliche Polymerisation wird unter ständigem Rühren bei 70 °C und 28 bar während 2 Stunden durchgeführt, hierbei verbrauchtes Monomer wird kontinuierlich durch frisches ersetzt.

Die Produktivität der Katalysatorkomponente (1), der heptanlösliche Anteil (als Maß für die Isotaktizität) und die Kornverteilung des dabei erhaltenen Polymerisats sind in der nachstehenden Tabelle zusammengestellt.

Beispiel 2

Es wird verfahren wie in Beispiel 1, mit der einzigen Ausnahme, daß als Phthalesterkomponente die gleiche Molmenge an Bis(chlorpropyl)phthalat eingesetzt wird.

Die Titankomponente enthält, 3,3 Gew.% Ti, 9,5 Gew.% Mg und 32,0 Gew.% Chlor.

Zu den so erhaltenen Polymerisationsergebnissen siehe ebenfalls die nachstehende Tabelle.

Beispiel 3

Es wird verfahren wie in Beispiel 1, mit der einzigen Ausnahme, daß als Phthalesterkomponente die gleiche Molmenge Bis(chlorethyl)phthalat eingesetzt wird.

Die Titankomponente enthält, 3,5 Gew.% Ti, 9,3 Gew.% Mg und 32, 4 Gew.% Chlor.

Vergleichsversuch

Herstellen der Titankomponente

Es wird verfahren wie im Beispiel 1. Anstelle der unter Beispiel 1 bis 3 genannten Halogenphthalester wird Diethylphthalat eingesetzt.

Man erhält eine Titankomponente, die 3,6 Gew.-% Titan, 4,4 Gew.-% Magnesium und 26 Gew.-% Chlor enthält.

Polymerisation

Sie erfolgt wie im Beispiel 1.

Zum dabei erreichten Polymerisationsergebnis siehe wiederum die nachstehende Tabelle.

| | Produktivität (g PP/g Kat.) | Heptanlösliche Anteile (Gew.-%) | Kornverteilung (mm) | | | | | Chlorgehalt im Produkt (ppm) |
|---|---|---|---|---|---|---|---|---|
| | | | <0,25 | 0,25-0,5 | 0,5-1 | 1-2 | >2 | |
| Beispiel 1 | 16 400 | 2,2 | 14,8 | 43,5 | 22,8 | 17,3 | 1,6 | 19 |
| Beispiel 2 | 16 000 | 2,3 | 12,9 | 46,7 | 28,6 | 10,6 | 1,2 | 20 |
| Beispiel 3 | 13 860 | 1,6 | 6,1 | 7,2 | 48,1 | 37,2 | 1,4 | 23 |
| Vergl.-vers. | 11 900 | 2,2 | 18,2 | 63,7 | 16,8 | 0,9 | 0,4 | 22 |

Wie aus der Tabelle zu ersehen ist, weist die Katalysatorkomponente aus Vergleichsversuch 1 eine

wesentlich geringere Produktivität auf als die Katalysatorkomponenten aus den erfindungsgemäßen Beispielen.

## Ansprüche

1. Verfahren zum Herstellen von Homopolymerisaten des Propens sowie Copolymerisaten des Propens mit untergeordneten Mengen anderer $C_2$- bis $C_{12}$-α-Monoolefine durch Polymerisation des bzw. der Monomeren bei Temperaturen von 20 bis 160 °C und Drücken von 1 bis 100 bar mittels eines Ziegler-Natta-Katalysatorsystems aus
(1) einer Titankomponente, die auf einem feinteiligen, formgebenden Kieselgel basiert und Titan, Magnesium, Chlor sowie ein Halogenbenzolcarbonsäurederivat enthält,
(2) einer Aluminiumkomponente der Formel
$Al\,R_3$,
worin steht
R für einen nicht mehr als 8 Kohlenstoffatome aufweisenden Alkylrest,
sowie
(3) einer Silankomponente der Formel
$R^1_n\,Si(OR^2)_{4-n}$,
worin stehen
$R^1$ für einen nicht mehr als 16 Kohlenstoffatome aufweisenden Kohlenwasserstoffrest gesättigt-aliphatischer und/oder aromatischer Natur,
$R^2$ für einen nicht mehr als 15 Kohlenstoffatome aufweisenden Alkylrest, und
n für eine Zahl von 0 bis 3,
mit den Maßgaben, daß das Atomverhältnis Titan aus der Titankomponente (1) : Aluminium aus der Aluminiumkomponente (2) 1 : 10 bis 1 : 800 und das Molverhältnis Aluminiumkomponente (2) : Silankomponente (3) 1 : 0,01 bis 1 : 0,8 beträgt, dadurch gekennzeichnet,
daß man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das einen Teilchendurchmesser von 1 bis 1000 µm, ein Porenvolumen von 0,3 bis 5 $cm^3/g$, eine Oberfläche von 100 bis 1000 $m^2/g$ besitzt, die Formel $SiO_2 \cdot a\,Al_2O_3$ - worin a steht für eine Zahl im Bereich von 0 bis 2 - hat und einen solchen Feuchtigkeitsgehalt aufweist, daß es bei einer Temperatur von 1000 °C im Verlauf von 0,5 Stunden 1 bis 20 Gew.% - bezogen auf das anfängliche Gesamtgewicht des Kieselgels - Wasser verliert, (Ib) einer magnesiumorganischen Verbindung der Formel $MgR^3R^4$ - worin $R^3$ und $R^4$ stehen für einen $C_2$- bis $C_{10}$-Alkylrest - und (Ic) einem gasförmigen Chlorierungsmittel der Formel ClZ - worin Z steht für Cl oder H -, derart, daß man zuerst
(1.1.1) in einer ersten Unterstufe in einem flüssigen inerten Kohlenwasserstoff unter ständiger Durchmischung bei einer Temperatur von 10 bis 120 °C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10 Molteile der magnesiumorganischen Verbindung (Ib), und das Zusammengebrachte während 0,5 bis 5 Stunden bei einer Temperatur im Bereich von 20 bis 140 °C hält, dann
(1.1.2) in einer zweiten Unterstufe unter ständiger Durchmischung bei einer Temperatur im Bereich von -20 bis +80 °C in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 2 bis 40 Molteile des Chlorierungsmittels (Ic), das Ganze 0,5 bis 5 Stunden bei einer Temperatur in dem genannten Bereich beläßt und daraufhin

(1.2) in einer zweiten Stufe ein festphasiges Zwischenprodukt herstellt aus (I), dem in der ersten Stufe erhaltenen Trägerstoff, (II) einem $C_2$- bis $C_4$-Alkanol, (III) Titantetrachlorid sowie (IV) einem Halogenphthalsäureabkömmling der Formel

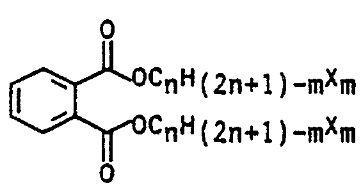

worin stehen X für Chlor, n ≤2 und m für eine Zahl zwischen 1 und 3, derart, daß man zuerst

(1.2.1) in einer ersten Unterstufe in einem flüssigen inerten Kohlenwasserstoff unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5 Molteile des Alkanols (II) und das Zusammengebrachte während 0,5 bis 5 Stunden bei einer Temperatur im Bereich von 20 bis 140 °C hält, anschließend

(1.2.2) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (1) 2 bis 20 Molteile des Titantetrachlorids (III), das Zusammengebrachte während 0,5 bis 5 Stunden auf einer Temperatur im Bereich von 10 bis 150 °C hält und das dabei resultierende festphasige Zwischenprodukt unter Abtrennung der flüssigen Phase isoliert,

mit der Maßgabe, daß zumindest im Zuge einer der Unterstufen (1.2.1) bis (1.2.2) der Phthalsäureabkömmling (IV) eingebracht wird, wobei mengenmäßig eingesetzt werden auf 1 Molteil Magnesium des Trägerstoffs (1) 0,01 bis 1 Molteile des Halogenphthalsäureabkömmlings (IV), dann

(1.3) in einer dritten Stufe das aus der zweiten Stufe erhaltene festphasige Zwischenprodukt bei einer Temperatur im Bereich von 100 bis 150 °C während einer Zeitspanne von 0,2 bis 5 Stunden einer ein- oder mehrstufigen oder kontinuierlichen Extraktion mit Titantetrachlorid oder einer Mischung aus Titantetrachlorid und einem bis zu 12 Kohlenstoffatome aufweisenden Alkylbenzol, deren Gewichtsanteil an Titantetrachlorid mindestens 5 % beträgt, unterzieht, wobei mengenmäßig eingesetzt werden auf 10 Gewichtsteile des aus der zweiten Stufe erhaltenen festphasigen Zwischenprodukts insgesamt 10 bis 1000 Gew.-Teile des Extraktionsmittels, und schließlich

(1.4) in einer vierten Stufe das in der dritten Stufe entstandene festphasige Produkt solange mit einem flüssigen inerten Kohlenwasserstoff wäscht, bis der Kohlenwasserstoff weniger als 2 Gew.% Titantetrachlorid enthält - und derart die Titankomponente (1) gewinnt.

2. Verfahren gemäß Patentanspruch 1, dadurch gekennzeichnet, daß ein Katalysatorsystem eingesetzt wird, dessen Silankomponente (3) eine solche ist, in deren Formel

$R^1_n\,Si(OR^2)_{4-n}$

stehen

$R^1$ für einen aliphatischen Kohlenwasserstoffrest oder einen Alkylphenylrest, dessen Alkylseitenkette $C_1$-$C_4$-Kohlenstoffatome besitzt.

$R^2$ für einen nicht mehr als 4 Kohlenstoffatome aufweisenden Alkylrest, und

n für die Zahl 1 oder 2.

3. Verfahren gemäß Patentanspruch 1, dadurch gekennzeichnet, daß ein Katalysatorsystem eingesetzt wird, dessen Silankomponente (3) eine solche ist, in deren Formel

$R^1_n\,Si(OR^2)_{4-n}$

stehen

$R^1$ für einen Phenylrest oder einen Alkylphenylrest mit 1 - 4 Kohlenstoffatomen in der Seitenkette, vorzugsweise p-Methylphenylrest oder vor allem einem verzweigten aliphatischen Kohlenwasserstoffrest, insbesondere Diisobutyl, Isobutylisopropyl und Diisopropyl

$R^2$ für einen nicht mehr als 4 Kohlenstoffatome aufweisenden Alkylrest, vor allem einen Methyl- oder Ethylrest und

n für die Zahl 1 oder 2.